# EUROPEAN PATENT SPECIFICATION

(11) **EP 4 019 962 B1**
(45) Date of publication and mention of the grant of the patent: **24.06.2026**
(21) Application number: 22155226.8
(22) Date of filing: 13.04.2012
(51) Int. Cl.: G01N 29/04, G01N 29/28, F01D 25/28, G01N 29/22, G01N 29/26

(54) **DEVICE AND A METHOD TO PERFORM ULTRASONIC TESTING OF TURBOMACHINES**
VORRICHTUNG UND VERFAHREN ZUR DURCHFÜHRUNG VON ULTRASCHALLPRÜFUNGEN AN TURBOMASCHINEN
DISPOSITIF ET PROCÉDÉ POUR EFFECTUER UN ESSAI ULTRASONIQUE DE TURBOMACHINES

(43) Date of publication of application: 29.06.2022
(62) Divisional of application: 12164014.8
(73) Proprietor: Siemens Energy Global GmbH & Co. KG, 81739 München (DE)
(72) Inventor: Clossen-von Lanken Schulz, Michael, 47661 Issum (DE); Jakielski, Sebastian, 46238 Bottrop (DE); Obermayr, Stefan, 47199 Duisburg (DE)

(56) References cited:
- WO-A1-2006/122798
- GB-A- 2 139 353
- US-A- 4 194 400
- US-A- 4 368 642
- US-B1- 6 487 922

## Description

The present technique relates to ultrasonic testing and more particularly to ultrasonic testing of turbomachines and its parts.

Ultrasonic testing is a widely known and prevalently used technique for non-destructive testing to assess structural integrity of a test subject. A typical ultrasonic testing system, also referred to as ultrasonic probe, consists of several functional units, and includes a transducer that generates high frequency ultrasonic waves which, after being introduced into a material of the test subject, propagate through the material along a wave path. When there is a flaw or discontinuity, e.g**.** a crack, in the wave path, part of the ultrasonic wave is reflected back from the flaw region. The corresponding ultrasonic wave i.e**.** the reflected wave is received by the transducer and transformed into an electrical signal representative of the flaw.

As is generally known, for successful ultrasonic testing, it is important that the surface of the test subject is properly coupled with the transducer. Presence of air between the transducer and the surface causes an impedance mismatch and leads to unreliable results or failure of the test. In the techniques of ultrasonic testing as known in the art, this coupling is achieved by several ways, for example by spreading a thin layer of oil on the surface.

Again, ultrasonic testing has been very useful in various testing and maintenance operations of parts of turbomachines e.g. gas turbines, steam turbines, etc. However, application of known techniques is impracticable, inefficient and inconvenient for certain structural parts of the turbomachines due to their complex geometry and design, resulting in problems in proper positioning of the ultrasonic probe and/or in achieving a desired coupling of the transducer with the test subject. For example, turbomachines often comprise slots, grooves or indentations in their structure and within these slots/grooves, additional structures may be present adding to the overall complexity. An example of afore-mentioned complexity in turbomachines is circumferential slots/grooves present on rotor and/or stator surfaces and containing seal strips that are held in the grooves/slots by the help of caulking wire.

For ultrasonic testing of such complex parts of the turbomachine several approaches are presently employed. In one approach, these additional structures, e.g. seal strips, are removed and subsequently the ultrasonic test is performed. Removal of the additional structures is expensive, time consuming and requires subsequent re-assembling of the additional structures.

In another approach, a combination of ultrasonic probe and wedges are used to promote proper coupling of the transducer with the test subject. However, the wedges are required to be moved along the complex parts and/or additional structures, e.g. seal strips, and thus suffer abrasions rendering them ineffective for continued use. Furthermore, the additional structures may have complex designs, such as slightly bent structure in case of the seal strips, and may additionally contain burrs. These result in ineffective coupling of the transducer with the complex part during ultrasonic testing, improper positioning of the transducer and/or cause damage to the transducer in case of contact.

GB 2139353 A discloses a testing device which uses a couplant for ultrasonic testing but needs sealing of this housing against the component to be tested.

Thus, the object of the present invention is to provide a simple and cost effective technique to perform ultrasonic testing of parts of turbomachines.

The object is achieved by a device of claim 1 and a method of claim 9. Advantageous developments emerge from the dependent claims.

The new technique of the invention provides a turbomachine testing device. The device performs ultrasonic testing of a component of a turbomachine by applying an ultrasonic wave to the component and detecting a corresponding ultrasonic wave after interaction with the component. The device includes at least one ultrasonic transducer and a couplant dispenser. The ultrasonic transducer transmits the ultrasonic wave and detects the corresponding ultrasonic wave. The couplant dispenser dispenses a couplant towards the component, such that the couplant when dispensed couples the ultrasonic transducer with the component during an operation of the ultrasonic transducer. One operation of the ultrasonic transducer starts at the instance when the ultrasonic transducer starts to emit the ultrasonic wave towards the component and ends at the instance when the ultrasonic transducer ends receiving the corresponding ultrasonic wave. In the turbomachine testing device, the housing is a tubular housing. The couplant dispenser is tubular in structure. The housing and the couplant dispenser are coaxially positioned. An annular space between the housing and the couplant dispenser serves as the couplant drain. This provides compactness to the device and thus, the device may be employed to function in narrow spaces within the turbomachine.

In one embodiment, the turbomachine testing device contains an angular adjustment module for adjusting a direction of propagation of the ultrasonic wave with respect to the component. The angular adjustment module may adjust the direction of propagation of the ultrasonic wave during a given operation or in between two operations of the ultrasonic transducer. Thus, a normal ultrasonic wave or an angular ultrasonic wave, with respect to the component, may be transmitted by the ultrasonic transducer. Moreover, the ultrasonic transducer can be properly positioned with respect to the component, as desired by a user of the device.

In another embodiment, the turbomachine testing device contains a translation module for adjusting a distance between the ultrasonic transducer and the component. The translation module may be configured to adjust the distance during a given operation or in between two operations of the ultrasonic transducer. Thus, the ultrasonic transducer can be properly positioned with respect to the component, as desired by the user.

In another embodiment of the turbomachine testing device, the ultrasonic transducer 20 is a phased array probe. The direction of the ultrasonic waves from the phased array probe can be changed electronically, without moving the ultrasonic transducer. This obviates the requirement of having mechanisms for physically turning or moving the ultrasonic transducer to sweep the ultrasonic waves through an area of interest. This makes the device compact in size and simple in construction.

In another embodiment, the turbomachine testing device contains a computing processor for receiving a signal from the ultrasonic transducer and computing a test result from the signal so received. The signal is representative of the corresponding ultrasonic wave detected by the ultrasonic transducer. The processor can be pre-programmed by a manufacturer of the device or may be configurable by the user. Thus, the test result representative of a parameter being tested, such as presence of a crack, is obtained which enables easier interpretation of the test.

In another embodiment, the turbomachine testing device contains a couplant sensor adapted to indicate a presence of the couplant in a space between the ultrasonic transducer and the component, during the operation of the ultrasonic transducer. Thus, in an event of absence of the couplant in the space between the ultrasonic transducer and the component during the operation of the ultrasonic transducer, as indicated by the couplant sensor, the operation may be discarded and a new operation may be performed in a desired way i.e. when the couplant couples the ultrasonic transducer with the component during the operation of the ultrasonic transducer.

In another embodiment of the turbomachine testing device, the ultrasonic transducer and the couplant dispenser are mechanically coupled fixing their relative positions. This ensures that direction and position of the ultrasonic wave and the couplant when dispensed remain unaltered with respect to the component, if the device is held in the same orientation with respect to the component in different operations of the ultrasonic transducer.

In another embodiment, the turbomachine testing device includes a couplant drain adapted to drain the couplant from the space between the ultrasonic transducer and the component. This provides operational flexibility to the device since the couplant may be removed from the space, as and when desired by the user. The couplant drain also ensures that a continuous flow of the couplant may be performed, if desired. The couplant drain may be connected to an inlet of the couplant dispenser or to a receptacle from which the couplant dispenser draws the couplant and thereby, the continuous flow of the couplant may be maintained within the device without needing additional amounts of the couplant.

In another embodiment of the turbomachine testing device, the couplant dispenser is tubular in structure and comprises a lumen. The lumen defines a flow path for the couplant. The ultrasonic transducer is positioned inside the lumen. This presents a structurally compact design of the device.

In another embodiment, the turbomachine testing device includes a housing, and the ultrasonic transducer and the couplant dispenser are arranged inside the housing. The housing provides compactness to the device and using the device becomes easier.

The present invention also provides a turbomachine testing method for testing a component of a turbomachine by applying an ultrasonic wave to the component and detecting a corresponding ultrasonic wave after interaction with the component. The method includes providing a turbomachine testing device according to any of the above-mentioned embodiments, dispensing the couplant towards the component such that the couplant when dispensed couples the ultrasonic transducer with the component, transmitting the ultrasonic wave, detecting the corresponding ultrasonic wave after interaction with the component and evaluating the corresponding ultrasonic wave so detected.

In one embodiment of the method, the couplant is continuously dispensed during the operation of the ultrasonic transducer. Thus, ensuring that at any given instance of the operation, the couplant couples the ultrasonic transducer with the component.

In another embodiment of the method, the component is a groove in the turbomachine. Thus, the ultrasonic testing of the groove and similar structures may be performed with ease.

In another embodiment of the method, the groove includes a seal strip. Thus, the ultrasonic testing of the component may be performed without removing the seal strip from the groove. Moreover, there is no mechanical wear and tear in the ultrasonic transducer or the seal strips as there is no mutual physical contact between them. The requirement of preparing wedges and specially designed ultrasonic probes, as known in the art of ultrasonic testing, is obviated. Furthermore, ultra-sound artifacts due to wedges are avoided.

The present technique is further described hereinafter with reference to illustrated embodiments shown in the accompanying drawings, in which:
- FIG 1: is a schematic drawing of an exemplary embodiment of a turbomachine testing device showing a cross-sectional view;
- FIG 2: is a schematic drawing of another exemplary embodiment of the turbomachine testing device; and
- FIG 3: is a flow chart representing a turbomachine testing method.

Hereinafter, the best mode for carrying out the present technique is described in details. Various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

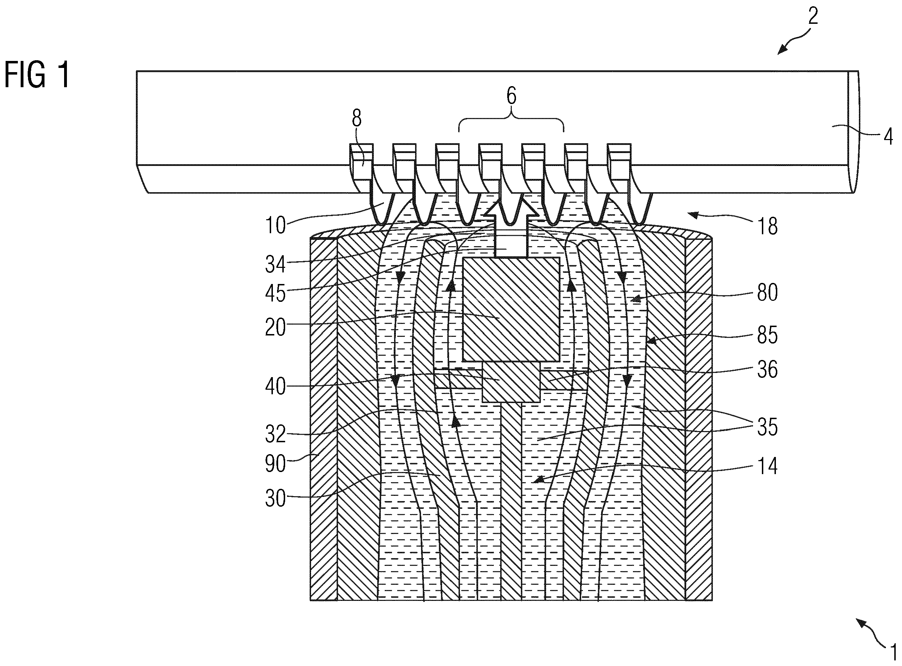

Referring now to the figures, FIG 1 schematically represents a cross-sectional view of an exemplary embodiment of a turbomachine testing device 1 for testing a component 4 of a turbomachine 2, in accordance with the present technique. More specifically, a region 6 of a groove 8 in the component 4 is being tested. The turbomachine 2 may be, but not limited to, a steam turbine and the component 4 may be, but not limited to, a rotor of the steam turbine 2. The groove 8 contains a seal strip 10. A plurality of seal strips 10 have been shown to be present in the groove 8 in FIG 1.

The device 1 includes at least one ultrasonic transducer 20 and a couplant dispenser 30. The ultrasonic transducer 20 transmits an ultrasonic wave and detects a corresponding ultrasonic wave, reflected by or in the component 4.

The ultrasonic transducer 20 may be a transducer as known in the art. The ultrasonic transducer 20 receives energy from an external source (not shown), converts the energy so received into the ultrasonic wave, and transmits the ultrasonic wave towards the component 4. A direction 45 of propagation of the ultrasonic wave has been depicted by an arrow mark in FIG 1. The ultrasonic transducer 20 receives the corresponding, reflected ultrasonic wave and converts the ultrasonic wave so received to generate a signal. The signal may be in form of a detectable electrical property such as voltage, electrical current, and so forth.

The signal so generated is representative of the corresponding ultrasonic wave which in turn is representative of a parameter of the component 4. For example, the parameter may be, but not limited to, a crack in the component 4. The corresponding ultrasonic wave will then represent the crack and thus, the signal so generated by the ultrasonic transducer 20 will represent the crack.

The construction and working principle of ultrasonic transducers is commonly known in the art of ultrasonic testing and thus, a detailed description of the same has not been provided herein for the sake of brevity.

The couplant dispenser 30 dispenses a couplant 35 towards the component 4 in such a way that the couplant 35 when dispensed couples the ultrasonic transducer 20 with the component 4 during an operation of the ultrasonic transducer 4, i.e. as soon as the couplant 35 has left the couplant dispenser 30, it is located between the ultrasonic transducer 20 and the component 4, thus coupling the ultrasonic transducer 20 with the component 4.

The couplant 35 is a liquid that facilitates the transmission of the ultrasonic waves from the ultrasonic transducer 20 into the component 4. The couplant 35 displaces at least a part of an air cavity (not shown) which may be present in a space 18 in between the ultrasonic transducer 20 and the component, thereby establishing a continuous path for the ultrasonic wave between the region 6 and the ultrasonic transducer 20 during the operation of the ultrasonic transducer 20. In other words, a localized coupling takes place because of presence of a volume of couplant 35 in the space 18 by dispensing the couplant 35 from the couplant dispenser 30.

Thus, during the operation of the ultrasonic transducer 20, at least a part of the ultrasonic waves transmitted from the ultrasonic transducer 20 directly enters the couplant 35 and then propagates to the component 4 through the couplant 35. This is achieved without travelling in any interspersing air that may have been present in the space 18 before the operation of the ultrasonic transducer 20. The interspersing air was removed, during the operation of the ultrasonic transducer 20, from the space 18 by the couplant 35 dispensed from the couplant dispenser 30.

The couplant dispenser 35 may be configured to dispense couplant 35 at periodic intervals or continuously during the operation of the ultrasonic transducer 20. The couplant dispenser 30 may even continuously dispense the couplant 35 across successive operations of the ultrasonic transducer 20.

The couplant 35 may be, but not limited to, water, oil, and so forth.

The ultrasonic transducer 20 and the couplant dispenser 30 may be mechanically coupled by a connector 36. The connector 36 may be a shaft.

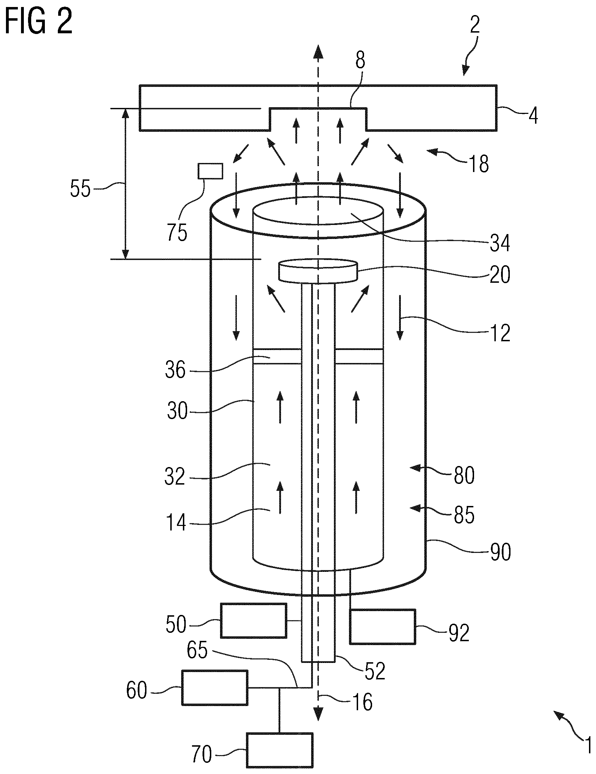

As shown in FIG 1, the device 1 includes a couplant drain 80 adapted to drain the couplant 35 from the space 18. In an exemplary embodiment, the couplant drain 80 receives the couplant 35 from the space 18 and directs the couplant 35 back to an inlet (not shown) of the couplant dispenser 30, so that the couplant 35 is circulating between the couplant dispenser 30 and the couplant drain 80. The circulation may be driven by a pump 92 (see FIG 2).

Alternatively, the couplant drain 80 directs the couplant 35 to a receptacle (not shown) to which the couplant dispenser 30 is fluidly connected and from which the couplant dispenser 30 draws the couplant 35 to be later dispensed by a dispenser outlet 34. The dispenser outlet 34 may be an opening or a nozzle of the couplant dispenser 30 facing the component 4 during the operation. The use of the receptacle has the advantage that impurities in the couplant 35 can be removed or filtered before the couplant 35 is fed back into the couplant dispenser 30.

In an exemplary embodiment of the device 1, as depicted in FIGs 1 and 2, the couplant dispenser 30 may be tubular in structure. The tubular couplant dispenser 30 contains a lumen 32 defining a flow path 14 for the couplant 35. The flow path 14 is a space inside the lumen 32 through which the couplant 35 flows. The ultrasonic transducer 20 is positioned inside the lumen 32. Thus, the couplant 35 flows in the lumen 32 and surrounding the ultrasonic transducer 20 placed inside the lumen 32.

The device 1 further includes a housing 90. The housing 90 may be an external casing or cover of the device 1. The ultrasonic transducer 20 and the couplant dispenser 30 are arranged inside the housing 90. The housing 90 may be made of metal, fiber-glass, and so forth.

As depicted in FIG 2 in combination with FIG 1, the housing 90 is a tubular housing. The tubular housing 90 and the couplant dispenser 30 are coaxially positioned around an axis 16. An annular space 85 between the tubular housing 90 and the couplant dispenser 30 serves as the couplant drain 80.

Now referring back to FIG. 1, the device 1 may include an angular adjustment module 40 for adjusting the direction 45 of propagation of the ultrasonic wave with respect to the component 4. The angular adjustment module 40 may contain a mechanical arrangement (not shown) configured to rotate the ultrasonic transducer 20, and an angular adjustment processor (not shown) to control functioning of the mechanical arrangement, and requisite electronic circuitry (not shown). The rotation of the ultrasonic transducer 20 may be around a point (not shown) where the ultrasonic transducer 20 is mounted on the mechanical arrangement. The angular adjustment processor may be pre-programmed by a manufacturer of the device 1 or may be configurable by a user of the device 1.

Now referring to FIG 2, the device 1 may include a translation module 50 for adjusting a distance 55 between the ultrasonic transducer 20 and the component 4. The translational module 50 may be connected to a translation shaft 52 to which the ultrasonic transducer 20 is mounted. The translation module 50 may contain a mechanical arrangement (not shown) configured to translate the translation shaft 52 and hence the ultrasonic transducer 20 along the axis 16, and a translation processor (not shown) to control functioning of the mechanical arrangement, and requisite electronic circuitry (not shown). The translation processor may be pre-programmed by the manufacturer of the device 1 or may be configurable by the user of the device 1.

Referring to FIG 2, in the device 1 the ultrasonic transducer 20 may be a phased array probe. Thus, the direction 45 of the ultrasonic waves from the phased array probe 20 can be changed electronically. The phased array probes 20 are known in the art and thus, the same has not been described herein for the sake of brevity. The device 1 may further include a corresponding controller 60 for controlling the phased array probe 20. The phased array probe 20 may be electrically connected to the controller 60 by an electrical connector 65 which may be an electrical wire. The controller 60 may be pre-programmed by the manufacturer of the device 1 or may be configurable by the user of the device 1.

As depicted in FIG 2, the device 1 may include a computing processor 70 for receiving the signal from the ultrasonic transducer 20 and computing a test result from the signal so received. The computing processor 70 may contain suitable algorithms to compute the test results. The computing processor 70 may be pre-programmed by the manufacturer of the device 1 or may be configurable by the user of the device 1. The test results may be displayed on a display unit (not shown).

Again, as depicted in FIG 2, the device 1 may include a couplant sensor 75 adapted to indicate a presence of the couplant 35 in the space 18 during the operation of the ultrasonic transducer 20. The couplant sensor 75 may be, but not limited to, a flow sensor to detect a flow of a liquid. The couplant sensor 75 may be connected to an alarm system (not shown) to indicate an event of absence of the couplant 35 in the space 18, during the operation of the ultrasonic transducer 20.

Alternatively, in another embodiment of the device 1, the presence of the couplant 35 in the space 18 during the operation of the ultrasonic transducer 20 may be monitored by the ultrasonic transducer 20 itself. This may be done by using the principles of backwall echoes, as generally known in the art of ultrasonic testing.

Again, as depicted in FIG 2, the device 1 may include the pump 92 for maintaining a flow of the couplant 35 into the lumen 32 in the flow path 14. The pump 92 may comprise a flow processor (not shown) to regulate a rate of flow of the couplant 35 and also a pattern of flow, namely continuous flow and/or intermittent flow, and so forth. The flow processor may be pre-programmed by the manufacturer of the device 1 or may be configurable by the user of the device 1.

FIG 2 also depicts direction of flow of the couplant 35 in the flow path 32 of the device 1 and the space 18. The direction of flow of the couplant 35 is depicted by arrows represented herein by reference numeral 12.

It may be appreciated by one skilled in the art, that the functionality of any one or all of the processors, namely the angular adjustment processor, the translation processor, and the flow processor may be integrated into a single processor referred to as a regulating processor (not shown). Similarly, the functionality of the regulating processor may be integrated into the computing processor 70.

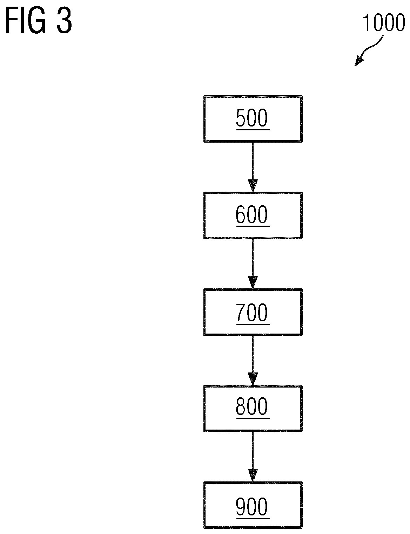

FIG 3 is a flow chart representing a turbomachine testing method 1000. In the method 1000, in a step 500 a turbomachine testing device 1 according to any of the above-mentioned embodiments is provided. In a step 600, the couplant 35 is dispensed towards the component 4 such that the couplant 35 when dispensed couples the ultrasonic transducer 20 with the component 4. In a step 700 the ultrasonic wave is transmitted by the ultrasonic transducer 20. In a step 800 the corresponding ultrasonic wave is detected and subsequently, in a step 900 the corresponding ultrasonic wave so detected is evaluated. The step 900 may include generation of the test result from the signals of the ultrasonic transducer 20.

In an exemplary embodiment of the method 1000, the couplant 35 is continuously dispensed during the operation of the ultrasonic transducer 20. Thus, the step 600 continues simultaneously with the step 700 and step 800, respectively.

In another exemplary embodiment of the method 1000, the component 4 is the groove 8, as shown in FIGs 1 and 2, in the turbomachine 2. The groove 8 may be with the sealing strips 10, as depicted in FIG 1, or may be without the sealing strips 10, as depicted in FIG 2.

While this invention has been described in detail with reference to certain embodiments, it should be appreciated that the present technique is not limited to those precise embodiments. Rather, in view of the present disclosure which describes the current best mode for practicing the invention, many modifications and variations would present themselves, to those skilled in the art without departing from the scope of the appended claims.

## Claims

1. A turbomachine testing device (1)
for testing a component (4) of a turbomachine (2) by applying an ultrasonic wave to the component (4) and detecting a corresponding ultrasonic wave after interaction with the component (4),
the device (1) comprising:
- at least one ultrasonic transducer (20) for transmitting the ultrasonic wave and detecting the corresponding ultrasonic wave after interaction with the component (4), and
- a couplant dispenser (30) for dispensing a couplant (35) towards the component (4) such that the couplant (35) when dispensed couples the ultrasonic transducer (20) with the component (4) during an operation of the ultrasonic transducer (20),
further comprising a couplant drain (80) adapted to drain the couplant (35) from the space (18) between the ultrasonic transducer (20) and the component (4),
further comprising a housing (90),
wherein the ultrasonic transducer (20) and
the couplant dispenser (30)
are arranged inside the housing (90),
- the housing (90) is a tubular housing,
- the housing (90) and the couplant dispenser (30) are coaxially positioned, and
- the couplant drain (80) is an annular space (85) between the housing (90) and the couplant dispenser (30).

2. The turbomachine testing device (1) according to claim 1, further comprising an angular adjustment module (40) for adjusting a direction (45) of propagation of the ultrasonic wave with respect to the component (4).

3. The turbomachine testing device (1) according to claims 1 or 2,
further comprising a translation module (50) for adjusting a distance (55) between the ultrasonic transducer (20) and the component (4).

4. The turbomachine testing device (1) according to any of claims 1 to 3,
wherein the ultrasonic transducer 20 is a phased array probe.

5. The turbomachine testing device (1) according to any of claims 1 to 4,
further comprising a computing processor (70) for receiving a signal from the ultrasonic transducer (20) and computing a test result from the signal so received,
wherein the signal is representative of the corresponding ultrasonic wave detected by the ultrasonic transducer (20).

6. The turbomachine testing device (1) according to any of claims 1 to 5,
further comprising a couplant sensor (75) adapted to indicate a presence of the couplant (35) in a space (18) between the ultrasonic transducer (20) and the component (4) during the operation of the ultrasonic transducer (20).

7. The turbomachine testing device (1) according to any of claims 1 to 6, wherein the ultrasonic transducer (20) and the couplant dispenser (30) are mechanically coupled.

8. The turbomachine testing device (1) according to any of claims 1 to 7,
wherein the couplant dispenser (30) is tubular in structure and comprises a lumen (32) defining a flow path (14) for the couplant (35) and
wherein the ultrasonic transducer (20) is positioned inside the lumen (32).

9. A turbomachine testing method (1000)
for testing a component (4) of a turbomachine (2) by applying an ultrasonic wave to the component (4) and detecting a corresponding ultrasonic wave after interaction with the component (4),
the method (1000) comprising:
- providing (500) a turbomachine testing device (1) according to any of claims 1 to 8,
- dispensing (600) the couplant (35) towards the component (4) such that the couplant (35) when dispensed couples the ultrasonic transducer (20) with the component (4),
- transmitting (700) the ultrasonic wave,
- detecting (800) the corresponding ultrasonic wave after interaction with the component (4), and
- evaluating (900) the corresponding ultrasonic wave so detected.

10. The method (1000) according to claim 9,
wherein the couplant (35) is continuously dispensed during the operation of the ultrasonic transducer (20).

11. The method (1000) according to claims 9 or 10,
wherein the component (4) is a groove (8) in the turbomachine (2).

12. The method (1000) according to claim 11,
wherein the groove (8) comprises a seal strip (10).

## Patentansprüche

1. Turbomaschinenprüfvorrichtung (1) zum Prüfen einer Komponente (4) einer Turbomaschine (2) durch Anwenden einer Ultraschallwelle auf die Komponente (4) und Erkennen einer entsprechenden Ultraschallwelle nach Interaktion mit der Komponente (4),
wobei die Vorrichtung (1) Folgendes umfasst:
- mindestens einen Ultraschallwandler (20) zum Übertragen der Ultraschallwelle und Erkennen der entsprechenden Ultraschallwelle nach Interaktion mit der Komponente (4) und
- ein Koppelmittelausgabegerät (30) zum Ausgeben eines Koppelmittels (35) in Richtung der Komponente (4) derart, dass das Koppelmittel (35), wenn es ausgegeben wird, den Ultraschallwandler (20) während eines Betriebs des Ultraschallwandlers (20) mit der Komponente (4) koppelt, ferner umfassend einen Koppelmittelablass (80), der dazu ausgelegt ist, das Koppelmittel (35) aus dem Raum (18) zwischen dem Ultraschallwandler (20) und der Komponente (4) abzulassen,
ferner umfassend ein Gehäuse (90),
wobei der Ultraschallwandler (20) und das Koppelmittelausgabegerät (30) innerhalb des Gehäuses (90) angeordnet sind,
- das Gehäuse (90) ein rohrförmiges Gehäuse ist,
- das Gehäuse (90) und das Koppelmittelausgabegerät (30) koaxial positioniert sind und
- der Koppelmittelablass (80) ein Ringraum (85) zwischen dem Gehäuse (90) und dem Koppelmittelausgabegerät (30) ist.

2. Turbomaschinenprüfvorrichtung (1) nach Anspruch 1, ferner umfassend ein Winkeleinstellmodul (40) zum Einstellen einer Richtung (45) einer Ausbreitung der Ultraschallwelle in Bezug auf die Komponente (4).

3. Turbomaschinenprüfvorrichtung (1) nach Anspruch 1 oder 2,
ferner umfassend ein Übersetzungsmodul (50) zum Einstellen einer Entfernung (55) zwischen dem Ultraschallwandler (20) und der Komponente (4).

4. Turbomaschinenprüfvorrichtung (1) nach einem der Ansprüche 1 bis 3,
wobei der Ultraschallwandler 20 eine phasengesteuerte Array-Sonde ist.

5. Turbomaschinenprüfvorrichtung (1) nach einem der Ansprüche 1 bis 4,
ferner umfassend einen Rechenprozessor (70) zum Empfangen eines Signals von dem Ultraschallwandler (20) und Berechnen eines Prüfergebnisses aus dem so empfangenen Signal,
wobei das Signal für die entsprechende Ultraschallwelle steht, die von dem Ultraschallwandler (20) erkannt wird.

6. Turbomaschinenprüfvorrichtung (1) nach einem der Ansprüche 1 bis 5,
ferner umfassend einen Koppelmittelsensor (75), der dazu ausgelegt ist, ein Vorhandensein des Koppelmittels (35) in einem Raum (18) zwischen dem Ultraschallwandler (20) und der Komponente (4) während des Betriebs des Ultraschallwandlers (20) anzugeben.

7. Turbomaschinenprüfvorrichtung (1) nach einem der Ansprüche 1 bis 6, wobei der Ultraschallwandler (20) und das Koppelmittelausgabegerät (30) mechanisch gekoppelt sind.

8. Turbomaschinenprüfvorrichtung (1) nach einem der Ansprüche 1 bis 7,
wobei das Koppelmittelausgabeberät (30) eine rohrförmige Struktur aufweist und ein Lumen (32) umfasst, das einen Strömungsweg (14) für das Koppelmittel (35) definiert, und wobei der Ultraschallwandler (20) innerhalb des Lumens (32) positioniert ist.

9. Turbomaschinenprüfverfahren (1000) zum Prüfen einer Komponente (4) einer Turbomaschine (2) durch Anwenden einer Ultraschallwelle auf die Komponente (4) und Erkennen einer entsprechenden Ultraschallwelle nach Interaktion mit der Komponente (4),
wobei das Verfahren (1000) Folgendes umfasst:
- Bereitstellen (500) einer Turbomaschinenprüfvorrichtung (1) nach einem der Ansprüche 1 bis 8,
- Ausgeben (600) des Koppelmittels (35) in Richtung der Komponente (4) derart, dass das Koppelmittel (35), wenn es ausgegeben wird, den Ultraschallwandler (20) mit der Komponente (4) koppelt,
- Übertragen (700) der Ultraschallwelle,
- Erkennen (800) der entsprechenden Ultraschallwelle nach Interaktion mit der Komponente (4) und
- Auswerten (900) der entsprechenden so erkannten Ultraschallwelle.

10. Verfahren (1000) nach Anspruch 9, wobei das Koppelmittel (35) während des Betriebs des Ultraschallwandlers (20) kontinuierlich ausgegeben wird.

11. Verfahren (1000) nach Anspruch 9 oder 10, wobei die Komponente (4) eine Nut (8) in der Turbomaschine (2) ist.

12. Verfahren (1000) nach Anspruch 11, wobei die Nut (8) eine Dichtungsleiste (10) umfasst.

## Revendications

1. Dispositif d'essai de turbomachine (1) pour réaliser l'essai d'un composant (4) d'une turbomachine (2)
par l'application d'une onde ultrasonore au composant (4) et la détection d'une onde ultrasonore correspondante après interaction avec le composant (4),
le dispositif (1) comprenant :
- au moins un transducteur ultrasonore (20) pour transmettre l'onde ultrasonore et détecter l'onde ultrasonore correspondante après interaction avec le composant (4), et
- un distributeur de couplant (30) pour distribuer un couplant (35) vers le composant (4) de sorte que le couplant (35) lorsqu'il est distribué couple le transducteur ultrasonore (20) avec le composant (4) pendant un fonctionnement du transducteur ultrasonore (20),
comprenant en outre un drain de couplant (80) adapté pour drainer le couplant (35) à partir de l'espace (18) entre le transducteur ultrasonore (20) et le composant (4),
comprenant en outre un boîtier (90),
dans lequel le transducteur ultrasonore (20) et le distributeur de couplant (30) sont disposés à l'intérieur du boîtier (90),
- le boîtier (90) est un boîtier tubulaire,
- le boîtier (90) et le distributeur de couplant (30) sont positionnés de manière coaxiale, et
- le drain de couplant (80) est un espace annulaire (85) entre le boîtier (90) et le distributeur de couplant (30).

2. Dispositif d'essai de turbomachine (1) selon la revendication 1, comprenant en outre un module de réglage angulaire (40) pour régler une direction (45) de propagation de l'onde ultrasonore par rapport au composant (4).

3. Dispositif d'essai de turbomachine (1) selon les revendications 1 ou 2,
comprenant en outre un module de translation (50) pour régler une distance (55) entre le transducteur ultrasonore (20) et le composant (4).

4. Dispositif d'essai de turbomachine (1) selon l'une quelconque des revendications 1 à 3,
dans lequel le transducteur ultrasonore (20) est une sonde à réseau à commande de phase.

5. Dispositif d'essai de turbomachine (1) selon l'une quelconque des revendications 1 à 4,
comprenant en outre un processeur informatique (70) pour recevoir un signal provenant du transducteur ultrasonore (20) et calculer un résultat d'essai à partir du signal ainsi reçu,
dans lequel le signal est représentatif de l'onde ultrasonore correspondante détectée par le transducteur ultrasonore (20).

6. Dispositif d'essai de turbomachine (1) selon l'une quelconque des revendications 1 à 5,
comprenant en outre un capteur de couplant (75) adapté pour indiquer une présence du couplant (35) dans un espace (18) entre le transducteur ultrasonore (20) et le composant (4) pendant le fonctionnement du transducteur ultrasonore (20).

7. Dispositif d'essai de turbomachine (1) selon l'une quelconque des revendications 1 à 6, dans lequel le transducteur ultrasonore (20) et le distributeur de couplant (30) sont couplés mécaniquement.

8. Dispositif d'essai de turbomachine (1) selon l'une quelconque des revendications 1 à 7,
dans lequel le distributeur de couplant (30) est de structure tubulaire et comprend une lumière (32) définissant un trajet d'écoulement (14) pour le couplant (35) et dans lequel le transducteur ultrasonore (20) est positionné à l'intérieur de la lumière (32).

9. Procédé d'essai de turbomachine (1000) pour réaliser l'essai d'un composant (4) d'une turbomachine (2) par l'application d'une onde ultrasonore au composant (4) et la détection d'une onde ultrasonore correspondante après interaction avec le composant (4),
le procédé (1000) comprenant :
- la fourniture (500) d'un dispositif d'essai de turbomachine (1) selon l'une quelconque des revendications 1 à 8,
- la distribution (600) du couplant (35) vers le composant (4) de sorte que le couplant (35) lorsqu'il est distribué couple le transducteur ultrasonore (20) avec le composant (4),
- la transmission (700) de l'onde ultrasonore,
- la détection (800) de l'onde ultrasonore correspondante après interaction avec le composant (4), et
- l'évaluation (900) de l'onde ultrasonore correspondante ainsi détectée.

10. Procédé (1000) selon la revendication 9, dans lequel le couplant (35) est distribué en continu pendant le fonctionnement du transducteur ultrasonore (20).

11. Procédé (1000) selon les revendications 9 ou 10, dans lequel le composant (4) est une rainure (8) dans la turbomachine (2).

12. Procédé (1000) selon la revendication 11, dans lequel la rainure (8) comprend une bande d'étanchéité (10).
